# EUROPEAN PATENT APPLICATION

(11) **EP 4 711 032 A1**
(43) Date of publication of application: **18.03.2026**
(21) Application number: 24199874.9
(22) Date of filing: 11.09.2024
(51) Int. Cl.: B01F 27/271, B01F 27/81, B01F 27/86, B01F 35/50, G01N 1/38, G01N 21/00, G01N 21/51, G01N 21/82

(54) **ROTOR-STATOR DEVICE AND PROCESS FOR MIXING**

(71) Applicant: Prosperodes GmbH, 38124 Braunschweig (DE)
(72) Inventor: Ritter, Dr., Christiane, Braunschweig (DE); Lührs, Dr., Thorsten, Braunschweig (DE)
(74) Representative: Taruttis, Stefan Georg

(57) **Abstract**

Device containing one disc (10) as a rotor, a first stator (21) arranged with a spacing from the disc, a second stator (22) arranged with a spacing from the disc, with a spacing between a projection (20) of the first stator and a projection (23) of the second stator, the first projection and the second projection between them forming a radial passage (16), a peripheral passage (33) arranged between the first stator and a housing (1), connecting the radial passage with a first passage and a peripheral passage (34) arranged between the second stator and the housing, connecting the radial passage with a second passage, wherein each peripheral passage (33,34) can be formed by a spacing of one or both of the stators from the housing.

## Description

The present invention relates to a device comprising as a rotor a disc driven for rotation in a static housing that is arranged around the disc with a spacing, and to a process for mixing a liquid composition, especially for exerting mechanical stress onto a liquid, especially by use of the device.

The device, e.g. for use in a process for mixing, is set up to exert mechanical stress onto a liquid, which mechanical stress is not homogenous and covers a broad range of forces. The device and the process are laid out especially for exerting mechanical stress onto a liquid that contains a biological sample, preferably including native prion protein, which can be added to the biological sample, e.g. in order to analyse the aggregation of native prion protein under the influence of mechanical stress during or subsequent to the process.

The device has the advantage of exerting mechanical stress onto a liquid that in the presence of aggregate prion protein results in highly reproducible aggregation of native conformation prion protein. Accordingly, the device and the process performed by the device is especially suitable for use in generating aggregate prion protein from native conformation prion protein in the presence of aggregate prion protein, which e.g. originates from a biological sample suspected of containing aggregate prion protein.

### State of the art

WO 2016/001334 A1 describes analysing the aggregation of prion protein by exerting a highly homogenous shearing force that is generated in the annular gap between a cylindrical rotor driven in a cylindrical stator, which is circumferentially closed and forms one continuous passage for liquid between the rotor and the stator. The rotor is arranged on a shaft that is driven by a drive coupled by a magnetic coupling.

### Object of the invention

It is an object of the present invention to provide an alternative device and an alternative process suitable for analysing the aggregation of prion protein under the influence of mechanical stress. Preferably, the alternative device and process shall avoid the generation of a homogenous shear force, e.g. avoid generating a shear force that differs by at most 20% or at most 10% from one shear force value. Preferably, the device and the process shall be set up for generating non-homogenous intense stress onto a liquid, e.g. in a small volume fraction thereof, which small volume fraction is in fluid connection with a larger volume fraction allowing for mixing of liquid without imparting intense stress.

### Description of the invention

The invention achieves the object by the features of the claims, and especially by a device comprising or consisting of a housing containing one disc as a rotor, rotationally symmetrical arranged on a disc shaft having an axis of rotation, the disc having a first disc surface extending from the disc shaft to the circumferential disc edge and opposite the first disc surface having a second disc surface extending from the circumferential disc edge to the centre of the second disc surface or, in an alternative embodiment, extending from the circumferential disc edge to the disc shaft projecting over the second surface,
a first stator arranged with a spacing from the disc, e.g. from the first disc surface, the first stator having a first projection which extends into a greater radius from the axis of rotation, respectively from the disc shaft, than the disc, wherein optionally the first projection, especially its first edge, is arranged in a radius from the axis of rotation that is greater than the radius of the disc, or the first projection of the first stator extends over a portion of the first disc surface and in its first projection, especially in its first edge, extends over the circumferential edge of the disc into a smaller radius from the axis of rotation, respectively from the disc shaft, than the disc, wherein the first stator is spaced from the disc shaft forming a first passage for liquid to pass into a first interspace formed by the spacing of the first stator from the disc,
a second stator arranged with a spacing from the disc, e.g. from the second disc surface, and opposite from the first stator, the second stator extending over a portion of the second disc surface, the second stator having a second projection which extends into a greater radius from the axis of rotation than the disc, wherein optionally the second projection, especially its first edge, is arranged in a radius from the axis of rotation that is greater than the radius of the disc, or the second projection of the second stator extends over a portion of the second disc surface and in its second projection, especially in its first edge, extends over the circumferential edge of the disc into a smaller radius from the axis of rotation than the disc, the second stator having a central opening forming a second passage for liquid to pass into the second interspace formed by the spacing of the second stator from the disc,
with a spacing between the first projection of the first stator and the second projection of the second stator, the first projection and the second projection between them forming a radial passage connected to the first interspace and connected to the second interspace, wherein optionally the first projection and the second projection are arranged at equal distances from the median of the circumferential disc edge,
a peripheral passage arranged between the first stator and the housing, connecting the radial passage with the first passage and
a peripheral passage arranged between the second stator and the housing, connecting the radial passage with the second passage, wherein each peripheral passage can e.g. be formed by a spacing of one or both of the stators from the housing.

Optionally, the first projection and the second projection are arranged at different distances or at the same distance from the median of the circumferential rotor edge.

Preferably, the bottom of the housing contains an optically transparent window to allow for transmission of light having an excitation wavelength and for transmission of light having a longer wavelength emitted by a component of the liquid present within the housing. The window, herein also referred to as an optically transparent section, may be transparent e.g. for wavelengths 200 to 950 nm, e.g. wavelengths 400 to 850 nm. The window may be an inset in the bottom of the housing or the window may form the bottom of the housing. The window may be of glass, e.g. quartz glass, or of plastics.

Preferably, the housing, the first stator, the second stator, the disc are made of plastics, optionally the same or a different one. The disc shaft preferably is a round metal rod, or a round plastic rod.

Optionally, the first projection and the second projection can have surfaces which are parallel to one another, or which with increasing distance from the disc are arranged at a smaller distance, resulting in tapering with increasing distance from the disc, or which with increasing distance from the disc are arranged at a larger distance, resulting in diverging with increasing distance from the disc.

Optionally, the first projection and the second projection may be connected by webs extending across the radial passage. The second stator can be positioned and connected, e.g. by clamping, to the housing by webs extending between the housing and the second stator. The first stator can be positioned and connected, e.g. by clamping, to the housing by webs extending between the housing and the first stator.

It is preferred that the first stator at the smallest radius of its first projection and on its surface facing the disc has a first edge which is the surface fraction that is arranged with the smallest spacing from the disc. The surface of the first stator facing the disc, and adjacent to its first edge is arranged at a greater spacing from the disc. Optionally, adjacent to its first edge the surface of the first stator facing the disc may be concave, e.g. have an annular recess facing the disc, which recess opposite the first edge borders on a second edge of the first stator which second edge is spaced from the disc and from the disc shaft to form the first passage. The second edge is the portion of the first stator that is arranged with the smallest spacing from the disc shaft. The annular recess of the first stator is arranged at a larger spacing from the disc than the first edge and at a larger spacing from the disc than the second edge, and the annular recess may form a mixing zone for liquid.

It is preferred that the second stator at the smallest radius of its first projection and on its surface facing the disc has a first edge which is the surface fraction that is arranged with the smallest spacing from the disc. The surface of the first stator facing the disc, and adjacent to its first edge is arranged at a greater spacing from the disc. Optionally, adjacent to its first edge the surface of the second stator facing the disc may be concave, e.g. have an annular recess facing the disc, which recess opposite the first edge borders on a second edge of the second stator which second edge is spaced from the disc and from the central opening, which forms the second passage. The annular recess of the second stator is arranged at a larger spacing from the disc than the first edge and at a larger spacing from the disc than the second edge, and the annular recess may form a mixing zone for liquid.

Optionally, the first edge of the first stator and the first edge of the second stator are arranged at the same distance from the disc, and further optionally, a recess of the first stator facing the disc and a recess of the second stator facing the disc may have the same shape and distance from the disc.

The first surface of the disc adjacent to the disc shaft may have an annular section that is perpendicular to the disc shaft, with an adjacent surface section having a greater radius that tapers towards the circumferential edge.

The circumferential edge of the disc preferably is circular, e.g. rotationally symmetric and without protrusions or recesses. The circumferential edge of the disc may be a ring surface, which can be cylindrical or convex or concave, or the circumferential edge may be sharp-edged. The first disc surface may be continuous or with steps, sharp-edged, round-edged or bevelled.

Generally, at least in a small distance from the disc shaft, the first disc surface extending to the circumferential edge may taper towards the circumferential edge, e.g. frustrum-shaped, convexly curved or concavely curved, and/or the first disc surface may have an annular section that is e.g. rotationally symmetrical to the disc shaft, e.g. a flat ring section, and/or at least one annular section bulging over an adjacent annular section, and/or at least one annular section that is recessed from an adjacent annular section.

The second disc surface extending to the circumferential edge may taper towards the circumferential edge, e.g. frustrum-shaped, convexly curved or concavely curved, and/or the second disc surface may have an annular section that is perpendicular to the disc shaft, e.g. a flat ring section, and/or at least one annular section bulging over an adjacent annular section, and/or at least one annular section that is recessed from an adjacent annular section.

The second disc surface may differ from the first disc surface, or the second disc surface may be symmetrical to the first disc surface along a median plane of the disc that is perpendicular to the disc shaft.

Preferably, the second disc surface tapers to a central projection, e.g. a central tip or projecting central surface, such that the tapering surface and the central projection extend across the opening of the second stator. The tapering surface may taper conically, preferably tapers curvedly and/or non-linearly, e.g. tapers concavely with respect to a projected conical surface extending between the circumferential edge of the rotor and the central projection. The tapering of the second disc surface at least in a section that extends across the opening of the second stator has the advantage of guiding incident light that is irradiated in parallel to the axis of the rotor away, e.g. guiding incident light that is directed onto the second rotor surface towards the second stator, such that incident light which is irradiated into the device from its optically transparent section of the bottom is prevented from being reflected from the second rotor surface towards the optically transparent section of the bottom. As a result, the tapering of the second disc surface at least in its section that extends across the opening of the second stator is preferred for use of the device in irradiating light through the optically transparent section of the bottom and receiving scattered light through the optically transparent section of the bottom, e.g. for irradiating the inner volume of the device through the optically transparent section of the bottom and measuring scattered light transmitted through the optically transparent section of the bottom.

In a less preferred embodiment, the disc is cylindrical.

Generally, it is preferred that both the first disc surface and the second disc surface continuously taper to the circumferential edge, each with a frustrum-shape or rounded convex shape. More preferred, the first disc surface and the second disc surface at least in a radial section adjacent to the circumferential edge are symmetrical to a median plane of the disc, wherein the radial section adjacent to the circumferential edge extends for at least 50%, preferably at least 70% of the radius, determined from the circumferential edge.

Preferably, the disc shaft is guided in a bearing arranged in the housing and a drive coupling, e.g. a magnetic coupling, is arranged on the end of the disc shaft opposite the disc, and further preferred the end of the disc shaft opposite the disc is run in a terminal bearing, e.g. arranged in a terminal section of the housing, which section may be a lid closing the housing opposite its bottom.

Generally, the housing may have in inner diameter, e.g. at the level of the radial passage, of 3 to 10 mm or up to 7 mm or up to 5 mm or up to 4 mm, the disc, depending on the housing, may have a diameter of 2 to 8 mm or up to 4 mm.

The housing preferably is rotationally symmetrical about the disc shaft and extends with a spacing around the first stator and the second stator and has a bottom which with a spacing from the second stator and opposite the disc covers the cross-section of the housing. The housing with a spacing from the first stator and opposite the disc closes its cross-section, with an opening extending around the disc shaft with a spacing, which forms an inlet, preferably an annular gap, e.g. for filling liquid into the housing. In the process using the device, liquid is preferably introduced into the housing to completely fill the void volume of the housing, including the volume between the stators and the disc. Preferably adjacent the inlet, the housing covers a portion of the cross-section of the housing, e.g. such that the inlet has an open cross-section that is at maximum 30%, preferably at maximum 20% or at maximum 10% of the cross-section of the housing, which cross-section is e.g. determined at the level of the radial passage.

Preferably, a wall section of the housing, e.g. a central section of its bottom, a section of a side wall, optionally two opposite sections of the side wall of the housing is optically transparent, the side wall extending from the bottom to the opposite end, e.g. to the lid, of the housing.

In an embodiment, the device can be set up for driving the disc to rotation for at least two rotational frequencies and/or over a range of at least two frequencies, e.g. controlled over the range of at least two frequencies, e.g. stepwise or continuously, alternatingly or subsequently with each of the frequencies only once, or a combination thereof. Preferably, the device comprises a drive that is controlled, e.g. computer-controlled, to drive the disc to rotation. The drive can be coupled to the disc, e.g. by a magnetic coupling arranged on the end of the disc shaft opposite to the disc.

Preferably, the device is set up to drive the disc for intermittent rotation, e.g. to drive the disc for rotation in periods of accelerating the liquid as stressing phases separated by periods of resting phases, in which the disc is not rotated such that the liquid is not accelerated nor moved. In an embodiment, the device is set up to drive the disc to slow rotation during resting phases such that the liquid is slowly agitated, e.g. for a short period of time only or continuously. Therein, slow rotation is e.g. rotating the rotor to a rate of at maximum 10%, of at maximum 5% or of at maximum 2% or of at maximum 1% of the rotation rate for which the disc is rotated during the stressing phase. This set-up of the device has the advantage of avoiding diffusion limitation of compounds, e.g. of aggregated and/or of native protein, e.g. native prion protein, during a resting phase.

Generally, opposite its bottom the housing preferably contains a constriction which covers the cross-section of the inner volume with a spacing from the first stator and with a spacing from the disc shaft, e.g. is spaced by an annular gap from the disc shaft, which annular gap preferably is smaller, e.g. by at least 10%, at least 20% or at least 30%, than the first passage formed by the spacing of the second edge of the first stator from the disc shaft. Adjacent the constriction and in fluid connection with the volume formed by the spacing of the first stator from the constriction an escape volume is formed within the housing. Further preferred, the escape volume is formed between the bearing, e.g. a terminal extension of the bearing, and the housing. The escape volume can e.g. have an annular cross-section about the bearing, e.g. about its terminal extension. Generally, it is preferred that the escape volume has an annular cross-section which has a radius that increases with increasing distance from the constriction.

Preferably, the housing contains center baffles which extend generally radially to the axis of rotation between the housing and the radial passage, e.g. adjacent to the opening formed between the first stator and the second stator. Optionally, the center baffles may extend along the first peripheral passage, e.g. between the first stator and the housing, and/or the center baffles may extend along the second peripheral passage, e.g. between the second stator and the housing. Preferably, center baffles are arranged at equal spacings along the cross-section of the housing. An embodiment of a device has center baffles that extend across the opening formed between the first stator and the second stator and which border on the housing, and which center baffles extend along both the first peripheral passage formed by the spacing of the first stator from the housing, and along the second passage formed by the spacing of the second stator and the housing.

Preferably, the housing contains top baffles that extend between the first stator and the constriction, preferably extend from the first stator to adjacent the constriction, wherein generally preferable the top baffles extend radially to the axis of rotation, e.g. radially from the housing towards the rotor shaft, e.g. with a spacing from the rotor shaft.

Further preferable, the housing contains bottom baffles which extend between the second stator and the bottom of the housing, which bottom baffles extend radially to the axis of rotation.

The device has the advantage of being set up to impart a high mechanical stress on liquid along the edge of the rotor disc and when passing the first projection of the first stator and the second projection of the second stator, thereby imparting high stress within a small volume fraction of the inner volume of the device, respectively within a small volume of liquid, while liquid when passing through the larger volume formed by the radial passage and peripheral passages and/or by first and second interspaces are mixed without the high mechanical stress, e.g. non-turbulent flow. Accordingly, the device provides for a small volume in which high mechanical stress can be imparted onto liquid and a larger volume in which the liquid is mixed without high mechanical stress.

Generally herein, especially with reference to the figures, the first stator is interchangeably also referred to as upper stator, and the second stator is interchangeably also referred to as lower stator.

The invention is now described in greater detail with reference to the figures, which schematically show in
- Fig. 1 a cross-section of an embodiment of the device,
- Fig. 2 a cross-section of the embodiment of Fig. 1 with a rotational offset about the axis of rotation of the rotor shaft,
- Fig. 3 a cross-section E-E of Fig. 1 and Fig. 2,
- Fig. 4 a cross-section C-C of Fig. 1 and Fig. 2,
- Fig. 5 a cross-section G-G of Fig. 1 and Fig. 2,
- Fig. 6 a cross-section D-D of Fig. 1 and Fig. 2, and
- Fig. 7 a cross-section F-F of Fig. 1 and Fig. 2.

In the figures, same reference signs refer to functionally identical elements. Elements that are described with reference to the figures are elements of the device and may be combined also as an isolated elements with any element described herein above or in the claims.

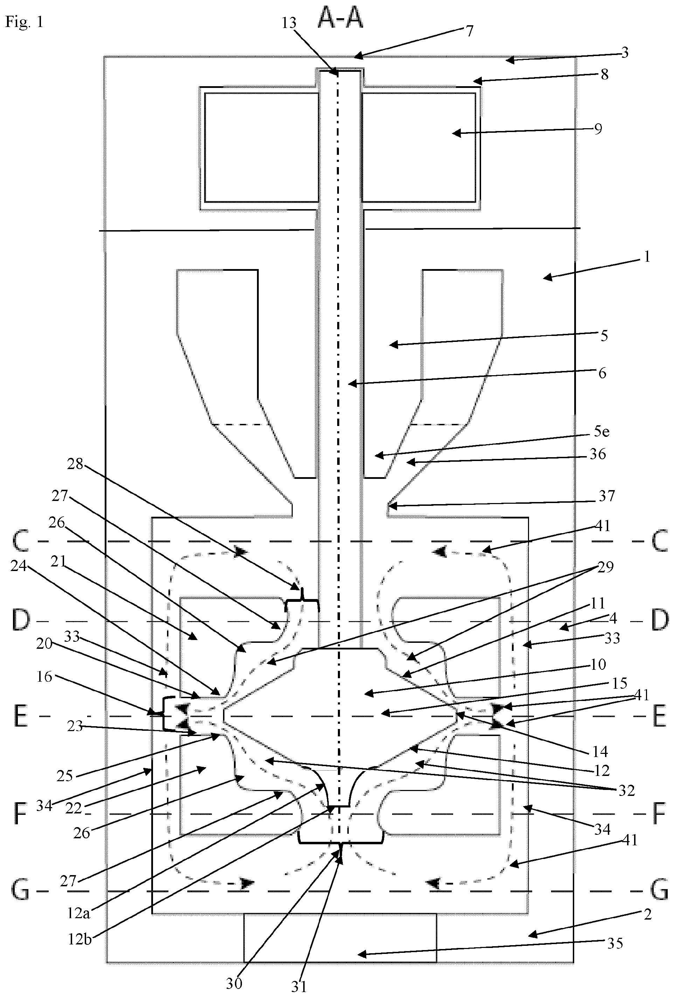

Fig. 1 shows an embodiment of the device of the invention, comprising a housing 1 with a bottom 2 and a top end or lid 3 at its opposite end, with side walls 4 connecting the bottom 2 with the top end 3. The housing 1 contains a bearing 5 guiding a disc shaft 6, which at one end is rotatably arranged in a terminal bearing 7 arranged in the top end 3. As preferred, the housing 1 adjacent its top end 3 has a recess 8 for receiving a coupling 9, which recess 8 may be a chamber closed by a lid. The coupling 9 is driven by a drive to rotate the disc shaft 6 and the disc 10 which is arranged on the disc shaft 6 opposite the coupling 9. As preferred, the disc shaft 6 opposite the bearing 5 does not project over the disc 10, such that the disc 10 has a first disc surface 11 enclosing the disc shaft 6 and an opposite second disc surface 12 that is not interrupted by the disc shaft 6. When performing the process by rotating the disc 10 with a liquid filled into the housing 1, the housing 1 is preferably arranged such that the liquid does not flow out of the housing 1, e.g. such that the first stator 21 is an upper stator which is arranged above the disc 10 and above the second stator 12 which is a lower stator, wherein the upper stator and the lower stator are spaced from one another and from the disc 10 arranged between the upper and the lower stators.

The first disc surface 11 and the second disc surface 12 are centered around the axis of rotation 13 in a frustrum-shape taper to the circumferential edge 14 of the disc 10.

The disc 10 is rotationally symmetrical to the disc shaft 6, which extends concentrically to the axis of rotation 13.

The circumferential edge 14 lies in a median plane 15 of the disc 10, which median plane 15 is in perpendicular to the axis of rotation. In the median plane 15 a radial passage 16 is formed between a first projection 20 of a first stator 21 and a spaced-apart second projection 23 of a second stator 22. In this exemplary embodiment, the disc 10 at its circumferential edge 14 extends into a radius from the disc shaft 6 in which radius there are arranged a first edge 24 of the first stator 21 and a first edge 25 of the second stator 22. In the housing, it is the first edge 24 of the first stator 21 that is arranged with the smallest spacing from the first disc surface 11, with the other surface sections of the first stator being arranged with a greater spacing from the first disc surface 11 and from the disc shaft 6. In the housing, it is the first edge 25 of the second stator 22 that is arranged with the smallest spacing from the second disc surface 12, with the other surface sections of the second stator being arranged with a greater spacing from the second disc surface 12. Accordingly, the smallest gap for liquid to pass through along the first disc surface 11 is formed between the first disc surface 11 and the first stator 21, especially its first edge 24, and the smallest gap for liquid to pass through along the second disc surface 12 is formed between the second disc surface 12 and the second stator 22, especially its first edge 25.

As the disc 10 when rotating has the greatest speed at its circumferential edge, it is currently assumed that the most intense mechanical stress or mechanical force and/or turbulence is generated between the first edge 24 of the first stator 21 and the first disc surface 11 as well as between the first edge 25 of the second stator 22 and the second disc surface 12, and within the radial passage 16, which is directly adjacent to the first edge 24 of the first stator 21 and directly adjacent to the first edge 25 of the second stator 22, and preferably directly adjacent to the circumferential edge 14. Mathematical simulations of fluid dynamics suggest that the most intense mechanical stress or mechanical force and/or turbulence within liquid is generated in the section of the passage 16 close to the median plane of the rotating disc rotor. The flow path formed by the first interspace 29, which is formed between the first stator 21 and the first disc surface 11, including the narrow passage formed between the first edge 24 of the first stator 21 and the first disc surface 11, and the flow path formed by the second interspace 32, which is formed between the second stator 22 and the second disc surface 12, including the narrow passage formed between the first edge 25 of the second stator 22 and the second disc surface 12 are separate flow paths, which merge at the adjacent radial passage 16.

Each of the first stator 21 and the second stator 22 may independently have a concave surface that faces the first disc surface 11 and respectively the second disc surface 12. Such a concave surface may be formed by a recess 26 of one or both of the first stator 21 and second stator 22. The surface of the first stator 21 facing the first disc surface 11 is arranged at a smaller radius from the disc shaft 6, respectively from the axis of rotation 13, than its first edge 24. As depicted, a curved, e.g. rounded second edge 27 may form the surface of the first stator 21 which is arranged with the smallest spacing from the disc 10 and from the disc shaft 6.

The spacing of the second edge 27 of the first stator 21 from the disc shaft 6 forms a first passage 28 which connects to the first interspace 29. The opening 30 of the second stator 12 forms a second passage 31 which connects to the second interspace 32.

The first stator 21 is spaced from the housing, forming a first peripheral passage 33 which connects the radial passage 16 to the first passage 28. The second stator 22 is spaced from the housing, forming a second peripheral passage 34 which connects the radial passage 16 to the second passage 31.

The bottom 2 of the housing 1 contains an optically transparent section 35 forming a window which is adapted for transmission of an excitation wavelength and for transmission of an emission wavelength.

As generally preferred, e.g. for use in irradiating light through the optically transparent section 35 of the bottom 2, more preferred irradiating light approximately perpendicular through the optically transparent section 35, and for measuring scatter light passing out of the device through the optically transparent section 35, the second disc surface 12 has a tapering section 12a which tapers to a central projection 12b, which may be a plane surface, a round surface or a tip.

In the figures, the dashed and curved lines indicate the flow direction 41 of a liquid within the device when rotating the disc 10.

As generally preferred, Fig. 1 shows that opposite the bottom 2 the housing 1 contains a constriction 37 which covers the cross-section of the inner volume with a spacing from the volume formed by its spacing from the first stator 21, and with a spacing from the disc shaft 6, e.g. with an annular gap from the disc shaft 6. Adjacent the constriction 37 and in fluid connection with the volume formed by the spacing of the first stator 21 from the constriction 37 an escape volume 36 is formed within the housing 1. As further preferred, the escape volume 36 is formed between a terminal extension 5e of the bearing 5 and the housing 1. The escape volume 36 shown here has an annular cross-section about the bearing 5, e.g. about its terminal extension 5e, which annular cross-section has a radius that increases with increasing distance from the constriction 37.

It was found that when rotating the disc 10 while the volume of the housing between its bottom 2 and a constriction 37 and at least a section of an escape volume 36 is filled with liquid, essentially no gas bubbles are generated and essentially no gas is drawn from above the filling level into the liquid present between the bottom 2 and the constriction 37. The escape volume 36 is connected to the volume formed by the spacing of the first stator 21 from a constriction 37 of the housing 1, e.g. through the spacing of the constriction 37 from the disc shaft 6.

In the embodiment depicted in Fig. 1, the inner volume of the housing 1 may be rotationally symmetric about the axis of rotation 13 of the disc shaft 6.

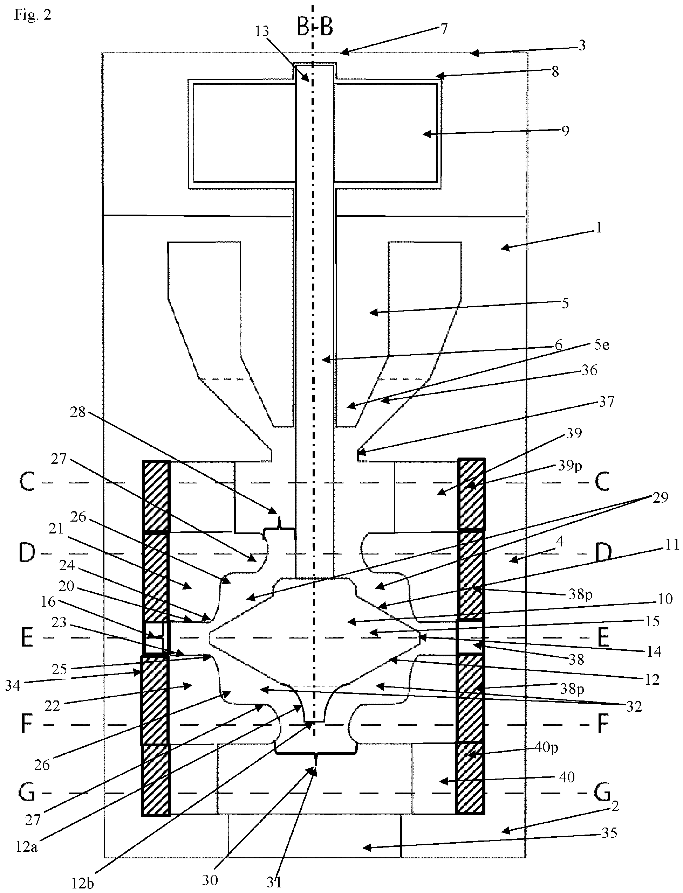

Preferably, the device has a cross-section along the axis of rotation 13 as e.g. shown in Fig. 1 and, with a rotational offset as shown in Fig. 2, a cross-section along the axis of rotation 13, wherein the device has center baffles 38 which extend generally radially to the axis of rotation 13 between the radial passage 16, which is e.g. formed by the opening formed between the first stator 21 and the second stator 22, and the housing 1. Optionally, the center baffles 38 may extend along the first peripheral passage 33, e.g. between the first stator 21 and the housing 1, and/or the center baffles 38 may extend across the second peripheral passage 34, e.g. between the second stator 22 and the housing. Preferably, center baffles 38 are arranged at equal spacings along the cross-section of the housing 1. An embodiment of a device having center baffles 38 that extend across the opening formed between the first stator 21 and the second stator 22 and which border on the housing 1, and which center baffles 38 extend along both the first peripheral passage formed by the spacing of the first stator 21 from the housing 1, and along the second passage formed by the spacing of the second stator 22 and the housing 1. Fig. 2 depicts a cross-section through preferred center baffles 38 along the axis of rotation 13.

In Fig. 2, the portion of top baffles 39 crossing the first peripheral passage 33 and extending to the housing 1 are depicted as top baffle portions 39p, the portion of bottom baffles 40 crossing the second peripheral passage 34 and extending to the housing 1 are depicted as bottom baffle portions 40p, and the portion of center baffles 38 extending between the first stator 21 and the housing 1 are depicted as center baffle portions 38p, and also the portion of center baffles 38 extending between the second stator 22 and the housing 1 are depicted as center baffle portions 38p.

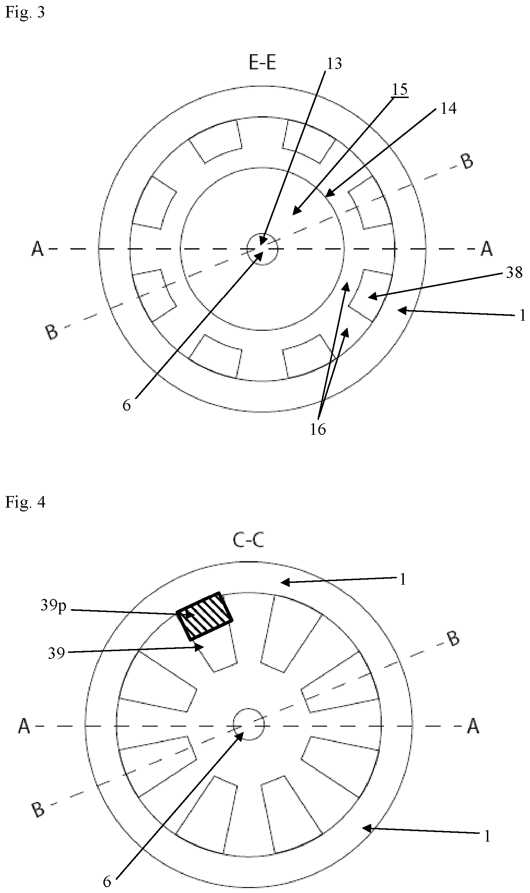

Fig. 3 shows a cross-section E-E of an exemplary embodiment of the device having center baffles 38 which extend up to the housing 1. As indicated, the cross-section A-A of Fig. 1 depicts a plane outside of center baffles 38, or the cross-section of an embodiment having a rotationally symmetrical device without center baffles 38. Fig. 3 shows that center baffles 38 preferably are arranged in the median plane 15 of the disc 10.

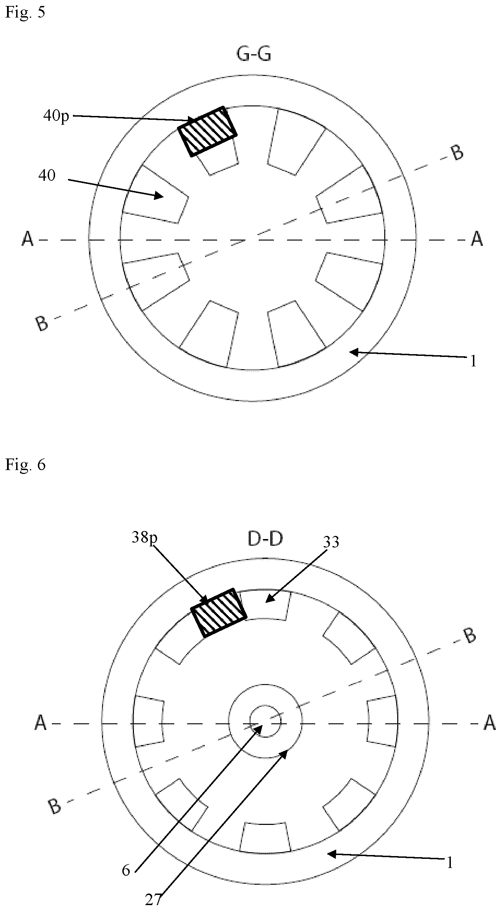

Optionally, the device has top baffles 39, which extend essentially radially to the axis of rotation 13 and extend between the first stator 21 and a constriction 37. Fig. 4 depicts a cross-section C-C, which is between constriction 37 and first stator 21, with top baffles 39 extending radially to the extended axis of rotation 13, herein forming a center axis. As depicted in Fig. 2, it is preferred that the top baffles 39 extend from the first stator 21 to the constriction 37. As preferred, the top baffles 39 extend from the housing 1, e.g. in that center baffle portions 39p are arranged adjacent the housing 1 and carry the top baffles 39. Fig. 5 in a cross-section G-G shows a preferred embodiment of bottom baffles 40 which comprise bottom baffle portions 40p extending up to the housing 1.

Further optionally as e.g. depicted in Fig. 5, the device has bottom baffles 40, which extend essentially radially to the axis of rotation 13 and extend between the second stator 22 and the bottom 2 of the housing 1. Bottom baffles 40 preferably extend radially from the housing 1 up to at maximum adjacent the opening 30 of the second stator 22, such that the bottom baffles 40 do not project beyond the second stator 22.

Fig. 5 in a cross-section G-G shows an exemplary embodiment of bottom baffles 40, which between them form a section of the second peripheral passage 34, discharging towards the open cross-section of the housing 1 between its optically transparent section 35 and the opening 30 of the second stator 22.

Fig. 6 in a cross-section D-D through the second edge 27 of the first stator 21 depicts the first passage 28, which is an annular gap by which the second edge 27 is spaced from the disc shaft 6. In this embodiment, center baffle portions 38p, e.g. webs, extend between the first stator 21 and the housing 1, forming a first peripheral passage 33 between center baffle portions 38p and between the center baffle portions 38p.

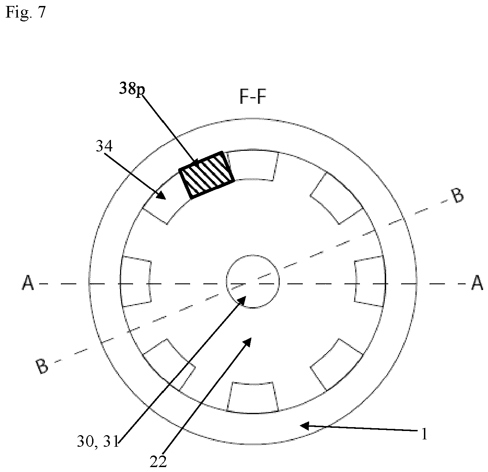

Fig. 7 in a cross-section F-F through the second edge 27 of the second stator 22 depicts the second passage 31 formed by an opening 30 of the second stator 22. Center baffle portions 38p extend between the second stator 22 and the housing, forming a second peripheral passage 34 between the center baffle portions 38p, the second stator 22 and the housing 1. Preferably, center baffles 38, top baffles 39 and bottom baffles 40 all extend along the same radials from the axis of rotation 13. The arrangement of center baffles 38, top baffles 39 and bottom baffles 40 in the same radials from the axis of rotation 13, e.g. arrangement of center baffles 38, top baffles 39 and bottom baffles 40 without radial offset, preferably may result in low turbulence in first and second peripheral passages 33, 34 and in turbulence within and adjacent to the radial passage 16, i.e. between and adjacent to the first projection 20 and the second projection 23 under the direct influence of the disc 10. Accordingly, a co-linear arrangement of center baffles 38, top baffles 39 and bottom baffles 40, i.e. without radial offset, allows for controlling the turbulence by rotating the disc 10 with little or no influence of the first and second peripheral passages 33, 34 on exerting stress on liquid passing through.

It was found that each of center baffles 38, preferably in combination with top baffles, result in increased turbulence, especially within the radial passage 16 and/or in the connecting region of the radial passage 16 to the first peripheral passage 33 and to the second peripheral passage 34. For high stress on the liquid, the device may have no top baffles 39 and no bottom baffles 40, but e.g. a first peripheral passage 33 between the first stator 21 and the housing 1, and a second peripheral passage 34 between the second stator 22 and the housing 1, wherein in one or both peripheral passages 33, 34 no flow guiding element, e.g. no baffle is arranged.

In an embodiment, center baffles 38 arranged next to the central passage 16 are present, e.g. in order to increase turbulence in the flow of liquid. Additionally or alternatively, center baffles 38 adjacent to the side wall 4 may be arranged with a spacing from the rotor 10, e.g. in order to redirect the flow of liquid from parallel to perpendicular with reference to the median plane of the rotor. Each of center baffles 38 and top baffles 39 as well as combined center baffles 38 and top baffles 39 serve to align the liquid to flow between the baffles 38, 38 with low turbulence and high laminarity. In a preferred embodiment, top baffles 39 and peripheral center baffles 38 are contained in the device, because top baffles 39 and peripheral center baffles 38 when present together prevent vortex formation e.g in the region of escape volume 36 and dramatically reduce stress on the liquid outside of the radial passage 16. It is generally preferred that the device contains top baffles 39, optionally in combination with center baffles 38, as the top baffles 39 have the effect of decreasing the introduction of air through the constriction 37.

**Reference signs:**

| | | | |
|---|---|---|---|
| 1 | housing | 23 | second projection |
| 2 | bottom of housing | 24 | first edge of first stator |
| 3 | top end, lid | 25 | first edge of second stator |
| 4 | side wall | 26 | recess |
| 5 | bearing | 27 | second edge |
| 5e | terminal extension | 28 | first passage |
| 6 | rotor shaft | 29 | first interspace |
| 7 | terminal bearing | 30 | opening of the second stator |
| 8 | recess | 31 | second passage |
| 9 | coupling | 32 | second interspace |
| 10 | rotor disc | 33 | first peripheral passage |
| 11 | first rotor surface | 34 | second peripheral passage |
| 12 | second rotor surface | 35 | optically transparent section |
| 12a | tapering section | 36 | escape volume |
| 12b | central projection | 37 | constriction |
| 13 | axis of rotation | 38 | center baffles |
| 14 | circumferential edge of the rotor | 38p | center baffle portions |
| 15 | median plane | 39 | top baffle |
| 16 | radial passage | 39p | top baffle portion |
| 20 | first projection | 40 | bottom baffle |
| 21 | first stator | 40p | bottom baffle portion |
| 22 | second stator | 41 | flow direction |

## Claims

1. Device comprising
a. a disc (10) rotationally symmetrical arranged on a disc shaft (6) having an axis of rotation (13),
b. the disc (10) having a first disc surface (11) extending from the disc shaft (6) to the circumferential disc edge (14) and opposite the first disc surface (11) having a second disc surface (12) extending from the circumferential edge (14) of the disc (10),
c. a first stator (21) arranged with a spacing from the first disc surface (11), the first stator (21) having a first projection (24) which extends into a greater radius from the axis of rotation (13) than the disc (10), wherein the first stator (21) is spaced from the disc shaft (6) forming a first passage (28) for liquid to pass into a first interspace (29) formed by the spacing of the first stator (21) from the first disc surface (11),
d. a second stator (22) arranged with a spacing from the second disc surface (12) and opposite from the first stator (21), the second stator (22) extending over a portion of the second disc surface (12), the second stator (22) having a second projection (23) which extends into a greater radius from the axis of rotation (13) than the disc (10), the second stator (22) having a central opening forming a second passage (31) for liquid to pass into a second interspace (32) formed by the spacing of the second stator (22) from the second disc surface (12),
e. with a spacing between the first projection (20) of the first stator (21) and the second projection (23) of the second stator (22), the first projection (20) and the second projection (23) between them forming a radial passage (16) connected to the first interspace (29) and connected to the second interspace (32),
f. wherein the radial passage (16) is connected to peripheral passages (33, 34) connecting the radial passage (16) to the first passage (28) and to the second passage (32).

2. Device according to claim 1, **characterized in that** the first projection (20) of the first stator (21) is arranged in a radius from the axis of rotation (13) that is greater than the radius of the disc (10).

3. Device according to claim 1, **characterized in that** the first projection (20) of the first stator (21) extends over a portion of the first disc surface (11) into a smaller radius from the axis of rotation (13) than the disc (10).

4. Device according to one of the preceding claims, **characterized in that** the second projection (23) of the second stator (21) is arranged in a radius from the axis of rotation (13) that is greater than the radius of the disc (10).

5. Device according to one of claims 1 to 3, **characterized in that** the second projection (23) of the second stator (22) extends over a portion of the second disc surface (12) into a smaller radius from the axis of rotation (13) than the disc (10).

6. Device according to one of the preceding claims, **characterized in that** the first projection (20) of the first stator (11) and the second projection (23) of the second stator (22) are arranged with equal spacing from a median plane that extends through the circumferential edge (14) of the disc (10).

7. Device according to one of the preceding claims, **characterized in that** the first projection (20) of the first stator and the second projection (23) of the second stator (22) are arranged in parallel to a median plane that extends through the circumferential edge (14) of the disc (10).

8. Device according to one of the preceding claims, **characterized in that** the first projection (20) of the first stator (21) and the second projection (23) of the second stator (22) are arranged at equal distances from the circumferential edge (14) of the disc (10).

9. Device according to one of the preceding claims, **characterized in that** the first disc surface (11) and the second disc surface (12) taper towards the circumferential edge (14).

10. Device according to one of the preceding claims, **characterized in that** the first disc surface (11) and the second disc surface (12) are convex.

11. Device according to one of the preceding claims, **characterized in that** the second disc surface (12) at least in a section (12a) that extends across the opening of the second stator (30) tapers to a central projection (12b).

12. Device according to one of the preceding claims, **characterized in that** the circumferential edge (14) is a cylindrical surface or a sharp edge.

13. Device according to one of the preceding claims, **characterized in that** opposite its bottom (2) the housing (1) contains a constriction (37) which covers the cross-section of the inner volume with a spacing from the first stator (21) and with a spacing from the disc shaft (6), wherein adjacent to the constriction and in fluid connection with the volume formed by the spacing of the first stator (21) from the constriction (37) an escape volume (36) is formed within the housing between the bearing (5) and the housing (1).

14. Device according to one of the preceding claims, **characterized in that** center baffles (38) are arranged adjacent the radial passage (16) and/or arranged adjacent the opening formed between the first stator 21 and the second stator 22, the center baffles (38) extending generally radially from the housing 1 to the axis of rotation 13.

15. Device according to one of the preceding claims, **characterized in that** radially to the axis of rotation (13) top baffels (39) extend between the first stator (21) and the constriction (37).

16. Device according to one of the preceding claims, **characterized by** bottom baffles (40) which extend between the second stator (22) and the bottom (2) of the housing (1) radially to the axis of rotation (13).

17. Use of a device according to one of the preceding claims for measuring light emanating from a liquid contained in the device by irradiating the inner volume of the device through an optically transparent section (35) of the bottom (2) and measuring light transmitted through the optically transparent section (35) of the bottom (2).
